# FASCICULE DE BREVET EUROPEEN

(11) **EP 3 556 059 B1**
(45) Date de publication et mention de la délivrance du brevet: **11.08.2021**
(21) Numéro de dépôt: 17825566.7
(22) Date de dépôt: 11.12.2017
(51) Int. Cl.: H04L 12/40

(54) **ORGANE DE COMMUNICATION À IMPÉDANCE SPÉCIFIQUE, POUR UN RÉSEAU MULTIPLEXÉ À FAISCEAUX MULTIPLES**
KOMMUNIKATIONSEINHEIT MIT SPEZIFISCHER IMPEDANZ FÜR EIN MULTIPLEXIERTES NETZWERK MIT MEHREREN BÜNDELN
COMMUNICATION UNIT WITH SPECIFIC IMPEDANCE, FOR A MULTIPLEXED NETWORK WITH MULTIPLE BUNDLES

(30) Priorité: 16.12.2016 FR 1662645
(43) Date de publication de la demande: 23.10.2019
(73) Titulaire: PSA Automobiles SA, 78300 Poissy (FR)
(72) Inventeur: FUSINELLI, Sebastien, 95540 Mery Sur Oise (FR); DHAINAUT, Jean Marc, 75007 Paris (FR); D AMBROSIO, Alain, 92100 Boulogne Billancourt (FR)
(86) Numéro de dépôt international: PCT/FR2017/053494
(87) Numéro de publication internationale: WO 2018/109345

(56) Documents cités:
- EP-A1- 2 001 169
- EP-A2- 1 211 849
- US-A1- 2007 103 166
- US-A1- 2014 207 994

## Description

L'invention concerne les réseaux de communication de type multiplexé, et plus précisément les organes de communication (ou nœuds) qui sont connectés aux faisceaux de fils de tels réseaux de communication.

On notera que l'invention concerne tous les réseaux de communication de type multiplexé, et notamment tous ceux de type CAN (« Controller Area Network ») et FlexRay. Il est rappelé que les réseaux de type CAN sont définis par la norme ISO 11898, et notamment ses parties ISO 11898-1, ISO 11898-2:2015 (ou CAN FD (« Controller Area Network Flexible Data-rate »), ISO 11898-5 et ISO 11898-6 (ou CAN HS (« Controller Area Network High Speed »)). De tels réseaux sont utilisés dans de nombreux domaines, et notamment dans les véhicules (éventuellement de type automobile), les avions et les bateaux.

Un réseau (de communication) multiplexé connecte au moins deux organes de communication (ou nœuds) via un groupe de N fils électriques (avec N ≥ 2 - généralement N = 2 ou 4). Ce groupe de N fils formant la liaison partagée entre les nœuds est généralement appelé bus. Le bus peut être réalisé par plusieurs segments, chaque segment reliant un organe de communication à un groupe d'épissures, ou deux groupes d'épissures. Ainsi, dans un réseau CAN chaque groupe de fils électriques du bus comprend un fil dit CAN_H et un fil dit CAN_L. Dans chaque segment du bus, le fil CAN_H et le fil CAN_L sont connectés d'un côté à deux broches d'un connecteur d'un organe de communication (ou nœud) et de l'autre côté à deux broches d'un connecteur d'un autre organe de communication ou aux fils CAN_H et CAN_L d'autres segments par des épissures.

Les échanges de données entre organes de communication (ou nœuds) se font via le réseau, au moyen de trames de données numériques multiplexées.

L'ensemble des fils électriques est lui-même découpé en un ou plusieurs faisceaux de fils pouvant également comprendre des fils électriques pour tout autre besoin que le réseau de communication. Le découpage répond à une logique d'assemblage.

Un réseau comprend toujours deux extrémités auxquelles sont connectés respectivement deux organes de communication (ou nœuds).

Actuellement, lorsque le réseau s'étend sur plusieurs (au moins deux) faisceaux, l'interconnexion entre ces faisceaux se fait via un équipement d'interface.

La publication US2014207994 décrit un système pour le contrôle du fonctionnement de participants au bus sur un bus dans un environnement de simulation comprenant une pluralité d'agencements de circuits et un bus, en particulier un bus CAN, les participants au bus pouvant être reliés chacun au bus par l'un des agencements de circuits, et comprenant en outre une unité de simulation pour la simulation de signaux de commande sur le bus. Le test fonctionnel comprend en particulier le test des fonctions et du comportement d'erreur des dispositifs de commande. Il est utilisé comme support lors du développement du matériel et du logiciel des dispositifs.

La publication EP2001169 divulgue un dispositif de raccordement de composants sur une ligne de BUS bifilaire, dispositif comportant au moins une résistance terminale et des moyens permettant d'assurer la connexion et/ ou la déconnexion du composant sur la ligne ainsi que la mise en place de la résistance terminale entre les deux lignes de BUS, dispositif comprenant également des moyens de commande des différents moyens de connexion.

Les normes qui régissent les réseaux multiplexés imposent que les organes de communication dits d'extrémité, qui sont connectés ensemble par la portion de bus la plus longue (distance cumulée des segments les séparant), appliquent aux N fils électriques qui sont connectés aux N broches principales de leur connecteur une impédance spécifique prédéterminée, optimisant la performance de communication (la valeur de l'impédance est typiquement basse, c'est-à-dire de l'ordre de quelques dizaines d'ohms). Les autres organes de communication dits intermédiaires qui sont connectés à des positions intermédiaires d'un réseau ne doivent pas appliquer de telles impédances spécifiques aux N fils électriques du groupe auquel ils sont connectés.

L'adaptation d'impédance (par application d'une impédance spécifique) est réalisée par des moyens (ou module) de terminaison qui sont actuellement intercalés entre les N bornes principales du connecteur de l'organe de communication d'extrémité et le module d'émission et de réception de ce dernier. Ce module de terminaison étant inamovible, il existe actuellement dans les réseaux multiplexés des organes de communication d'extrémité munis d'un module de terminaison et des organes de communication intermédiaires dépourvus de module de terminaison. Il en résulte une diversité de fabrication qui augmente les coûts, complexifie la gestion des stocks et peut parfois entraîner des erreurs dues à des interversions. Cette diversité de fabrication résulte également de la diversité du nombre de nœuds dans le réseau qui peut faire basculer un organe de communication de statut intermédiaire au statut d'extrémité et vice-versa.

L'invention a notamment pour but d'améliorer la situation.

Elle propose notamment à cet effet un organe de communication, destiné à équiper un réseau (de communication) de type multiplexé et comportant au moins un premier faisceau comportant au moins un groupe de N fils (avec N ≥ 2), et comprenant un premier connecteur muni de N premières bornes principales propres à être connectées respectivement aux N fils de ce groupe du premier faisceau.

Cet organe de communication se caractérise par le fait qu'il comprend également :
- des moyens de terminaison propres à définir N impédances spécifiques, et
- au moins un second connecteur muni, d'une part, de N secondes bornes principales connectées respectivement aux N premières bornes principales et propres à être connectées respectivement à N fils d'un groupe d'un second faisceau du réseau, et, d'autre part, de N bornes auxiliaires connectées aux moyens de terminaison afin d'être placées respectivement aux N impédances spécifiques, et propres, lorsque l'organe de communication est installé à une extrémité du réseau, à être couplées respectivement aux N secondes bornes principales du second connecteur afin qu'elles appliquent respectivement aux N premières bornes principales les N impédances spécifiques.

Ainsi, l'organe de communication peut être avantageusement utilisé en tant qu'extrémité du réseau (de communication), et dans ce cas ses moyens de terminaison sont utilisés, ou bien en tant qu'interface de couplage entre au moins deux faisceaux du réseau de communication, et dans ce cas ses moyens de terminaison ne sont pas utilisés. Cela permet notamment de reporter la diversité de câblage sur le seul second faisceau.

L'organe de communication selon l'invention peut comporter d'autres caractéristiques qui peuvent être prises séparément ou en combinaison, et notamment :
- il peut comprendre un module d'émission et de réception connecté aux N premières bornes principales et aux N secondes bornes principales,
- les N impédances spécifiques par rapport à la masse peuvent être comprises entre vingt ohms et cinquante ohms ;
- lorsque N est égal à deux, ses moyens de terminaison peuvent comprendre, d'une première part, un premier composant résistif comprenant une première borne de connexion connectée à la première borne auxiliaire et une seconde borne de connexion, d'une deuxième part, un second composant résistif comprenant une première borne de connexion connectée à la seconde borne auxiliaire et une seconde borne de connexion connectée à la seconde borne de connexion du premier composant résistif, et, d'une troisième part, un composant capacitif comprenant une première borne de connexion connectée aux secondes bornes de connexion des premier et second composants résistifs et une seconde borne de connexion connectée à la masse ;
   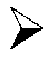 le premier composant résistif peut présenter une résistance comprise entre 40 ohms et 66 ohms ;
   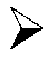 le second composant résistif peut présenter une résistance comprise entre 40 ohms et 66 ohms ;
   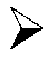 le composant capacitif peut présenter une capacité comprise entre 4 nF et 110 nF.

L'invention propose également un véhicule, éventuellement de type automobile, et comprenant, d'une part, un réseau (de communication) de type multiplexé et comportant au moins un premier faisceau comportant au moins un groupe de N fils (avec N ≥ 2), et, d'autre part, au moins un organe de communication du type de celui présenté ci-avant et placé à une extrémité du réseau (de communication) en ayant ses N bornes auxiliaires couplées respectivement aux N secondes bornes principales d'un second connecteur.

D'autres caractéristiques et avantages de l'invention apparaîtront à l'examen de la description détaillée ci-après, et des dessins annexés sur lesquels :
- la figure 1 illustre schématiquement et fonctionnellement un premier exemple de réseau de communication multiplexé comprenant notamment un premier faisceau auquel sont connectés plusieurs organes de communication, dont un selon l'invention situé à une extrémité,
- la figure 2 illustre schématiquement et fonctionnellement un exemple de réalisation de l'organe de communication selon l'invention de la figure 1, et
- la figure 3 illustre schématiquement et fonctionnellement un second exemple de réseau de communication multiplexé comprenant des premier et second faisceaux auxquels sont connectés des organes de communication, dont un selon l'invention situé dans une position intermédiaire.

L'invention a notamment pour but de proposer un organe de communication (ou nœud) OC destiné à équiper un réseau de communication RC de type multiplexé et comportant au moins un premier faisceau F1 comportant au moins un groupe de N fils (avec N ≥ 2).

Dans ce qui suit, on considère, à titre d'exemple non limitatif, que le réseau de communication multiplexé RC est de type CAN. Ainsi, il pourra s'agir d'un réseau de type CAN FD (Controller Area Network Flexible Data-rate) ou CAN HS (Controller Area Network High Speed). Mais l'invention n'est pas limitée à ce type de réseau de communication multiplexé. Elle concerne en effet tout type de réseau de communication multiplexé, et notamment ceux de type FlexRay.

Par ailleurs, on considère dans ce qui suit, à titre d'exemple non limitatif, que le réseau de communication RC fait partie d'un véhicule automobile. Mais l'invention n'est pas limitée à ce type d'application. Elle concerne en effet tout type de système, équipement, dispositif, ou installation pouvant héberger au moins un réseau de communication multiplexé, et notamment les véhicules terrestres, les bateaux, les avions, les installations (éventuellement de type industriel), et les bâtiments.

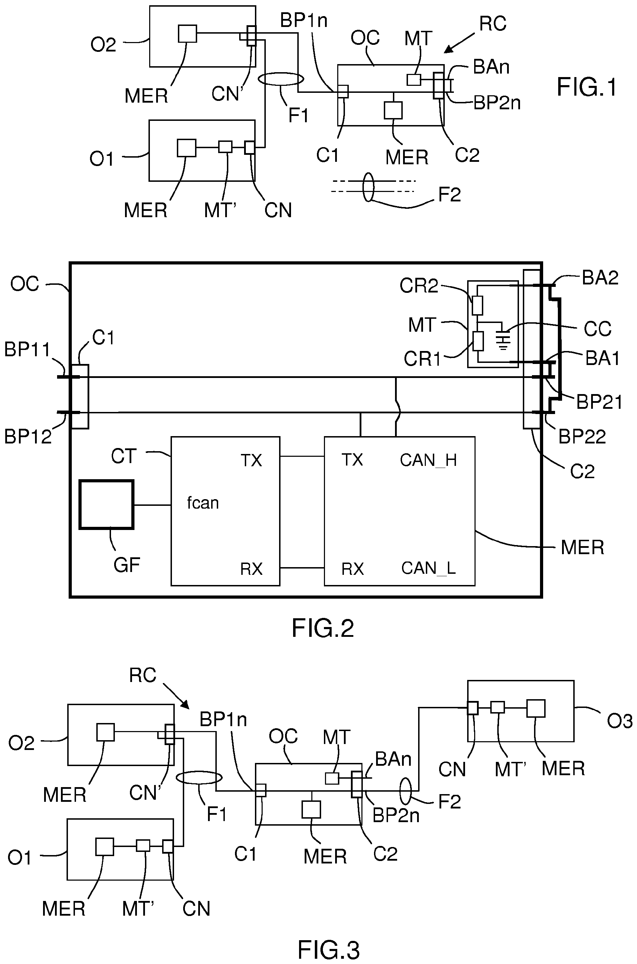

On a schématiquement illustré sur les figures 1 et 3 deux exemples non limitatifs de réseau (de communication) RC comprenant des premier F1 et second F2 faisceaux de fils (électriques) interconnectant entre eux des organes de communication Oj et OC.

Par exemple, le premier faisceau F1 est un faisceau principal du véhicule et le second faisceau F2 est dédié au pavillon du véhicule (et notamment à la caméra vidéo multifonctions, par exemple).

Dans ce qui suit, on considère, à titre d'exemple non limitatif, que les organes de communication OC et Oj sont tous des calculateurs. Mais cela n'est pas obligatoire. En effet, ils peuvent se présenter sous n'importe quelle forme dès lors qu'ils constituent chacun un équipement communicant propre à échanger des trames de données numériques avec d'autres organes via le réseau de communication RC.

Chacun des premier F1 et second F2 faisceaux comporte au moins un groupe de N fils (électriques), avec N ≥ 2. Dans l'exemple qui est ici décrit, le réseau de communication RC est de type CAN. Par conséquent, le premier faisceau F1, comme le second faisceau F2, comporte au moins un groupe de deux fils (soit N = 2). Les deux fils de chaque groupe sont respectivement dits « CAN_H » et « CAN_L ».

Dans le premier exemple de réalisation illustré sur la figure 1, seuls les organes de communication OC et Oj, qui sont connectés au premier faisceau F1, ont été représentés. Ceux qui sont connectés au second faisceau F2 ne sont pas représentés car ils ne sont pas concernés, comme on le verra plus loin.

Le premier faisceau F1 comprend ici une première extrémité à laquelle est connecté un organe de communication OC selon l'invention, et une seconde extrémité à laquelle est connecté un premier organe de communication classique O1 (j = 1). On notera que dans cet exemple purement illustratif le premier organe de communication classique O1 est connecté au premier faisceau F1 via un deuxième organe de communication classique 02 (j = 2). Ces première et seconde extrémités du premier faisceau F1 constituent ici également, respectivement, les première et seconde extrémités du réseau RC.

Plus précisément, le premier organe de communication classique O1 comprend ici, notamment, un module d'émission et de réception MER, et un connecteur CN comprenant N bornes principales (ici N =2) couplées au module d'émission et de réception MER via des moyens (ou un module) de terminaison MT'. Ce dernier (MT') est chargé de réaliser une adaptation d'impédance au niveau de la seconde extrémité du réseau RC, par application d'une impédance spécifique.

Le deuxième organe de communication classique 02 étant installé dans une position intermédiaire, il comprend ici, notamment, un module d'émission et de réception MER, et un connecteur CN' comprenant N bornes principales (ici N = 2) couplées au module d'émission et de réception MER, et N bornes de couplage (ici N = 2) couplées respectivement aux N bornes principales du connecteur CN du premier organe de communication classique O1, via N fils. Un tel montage en série de deux organes de communication classiques est généralement appelé « daisy chain » en langue anglaise. On notera que dans une variante de réalisation les N bornes principales du connecteur CN du premier organe de communication classique O1 pourraient être directement connectées au premier faisceau F1 via un groupe de N fils.

Dans le second exemple de réalisation illustré sur la figure 3, l'organe de communication OC selon l'invention assure l'interface entre les premier F1 et second F2 faisceaux. Il n'est donc plus ici à considérer comme étant placé à la première extrémité du réseau RC, mais comme placé à un niveau intermédiaire de ce dernier (RC). Un troisième organe de communication classique 03 (j = 3), connecté à une extrémité du second faisceau F2, est ici considéré comme placé à la première extrémité du réseau RC et donc assure l'adaptation d'impédance de ce dernier (RC). Il est couplé à l'organe de communication OC selon l'invention via un groupe de N fils (ici N = 2) du second faisceau F2.

Ce troisième organe de communication classique 03 comprend ici, notamment, un module d'émission et de réception MER, et un connecteur CN comprenant N bornes principales (ici N = 2) couplées, d'une part, au module d'émission et de réception MER via des moyens (ou un module) de terminaison MT', et, d'autre part, à l'organe de communication OC selon l'invention via un groupe de N fils du second faisceau F2. Les moyens (ou module) de terminaison MT' sont chargés de réaliser une adaptation d'impédance au niveau de la première extrémité du réseau RC, par application d'une impédance spécifique.

Le module d'émission et de réception MER de chaque organe de communication classique Oj est un module (ou étage) chargé d'assurer l'interface physique de son organe de communication Oj avec le réseau RC. Il est plus précisément agencé pour détecter chaque tension différentielle Vd existant entre (ici) les premier (CAN_H) et second CL (CAN_L) fils du groupe auquel il est couplé, et pour imposer entre les premier et second fils du groupe auquel il est couplé, une tension différentielle Vd (= VH - VL) représentant un état récessif ou un état dominant lent.

On notera qu'afin de simplifier les figures 1 et 3 les fils de chaque groupe sont matérialisés par un unique fil, les bornes principales de chaque connecteur sont matérialisées par une unique borne principale, les bornes de couplage de chaque connecteur sont matérialisées par une unique borne de couplage, et les générateur de fréquence et contrôleur de réseau de chaque organe de communication classique Oj ne sont pas représentés.

Il est rappelé que le générateur de fréquence est agencé pour produire une fréquence prédéfinie adaptée aux organes de communication OC et Oj qui sont couplés à un faisceau F1 ou F2. Il est également rappelé que le contrôleur de réseau est chargé d'assurer le pilotage et l'arbitrage de son organe de communication Oj. Pour ce faire, il est alimenté par le générateur de fréquence avec la fréquence prédéfinie et agencé pour utiliser localement chaque signal représentatif d'une tension différentielle Vd détectée par le module d'émission et de réception MER sur le faisceau F1 ou F2 associé, et notamment pour déterminer s'il représente un état récessif ou un état dominant lent, et pour fournir au module d'émission et de réception MER un signal qui est représentatif de chaque tension différentielle Vd, représentative d'un état récessif ou dominant lent, devant être imposée. La fonction d'arbitrage est chargée de déterminer en permanence l'état du réseau RC.

Comme illustré sur la figure 2, un organe de communication OC, selon l'invention, comprend au moins un premier connecteur C1, un second connecteur C2 et des moyens (ou module) de terminaison MT.

De préférence et comme illustré, il (OC) comprend également un générateur de fréquence GF, un module d'émission et de réception MER, et un contrôleur de réseau CT (ici de type CAN),

Le générateur de fréquence GF, le module d'émission et de réception MER et le contrôleur de réseau CT assurent les mêmes fonctions que celles décrites ci-avant pour les organes de communication classiques Oj.

Le premier connecteur C1 est muni de N premières bornes principales BP1n (n = 1 à N) propres à être connectées respectivement aux N fils d'un groupe du premier faisceau F1. Il est rappelé qu'ici N = 2 et donc n = 1 ou 2.

Les moyens de terminaison MT sont propres à définir N impédances spécifiques.

Le second connecteur C2 est muni de N secondes bornes principales BP2n et de N bornes auxiliaires BAn.

Les N secondes bornes principales BP2n sont connectées respectivement aux N premières bornes principales BP1n et sont propres à être connectées respectivement à N fils d'un groupe du second faisceau F2 du réseau RC.

Les N bornes auxiliaires BAn sont connectées aux moyens de terminaison MT afin d'être placées respectivement aux N impédances spécifiques. De plus, ces N bornes auxiliaires BAn sont propres, lorsque leur organe de communication OC est installé à une extrémité du réseau RC (comme dans le premier exemple illustré sur les figures 1 et 2), à être couplées respectivement aux N secondes bornes principales BP2n du second connecteur C2 afin qu'elles appliquent respectivement aux N premières bornes principales BP1n les N impédances spécifiques qui leurs sont appliquées par les moyens de terminaison MT.

Le couplage entre les bornes auxiliaires BAn et les N fils d'un groupe du second faisceau F2 peut se faire au moyen de petites sections de fils électriques d'interconnexion ou de barrettes conductrices d'interconnexion. Les extrémités opposées de ces fils électriques d'interconnexion peuvent, par exemple, être soudées respectivement, d'une part, aux bornes auxiliaires BAn, et, d'autre part, soit aux N fils, soit aux N secondes bornes principales BP2n (comme illustré non limitativement).

Comme illustré sur la figure 3, lorsque l'organe de communication OC n'est pas installé à une extrémité du réseau RC, ses moyens de terminaison MT ne sont pas utilisés, et donc les N bornes auxiliaires BAn ne sont pas respectivement couplées aux N secondes bornes principales BP2n du second connecteur C2. Dans le second exemple illustré sur la figure 3, les N secondes bornes principales BP2n du second connecteur C2 sont couplées respectivement aux N bornes principales du connecteur CN du troisième organe de communication classique 03 via N fils d'un groupe du second faisceau F2.

L'organe de communication OC peut donc être avantageusement utilisé d'au moins deux façons, soit en tant qu'extrémité du réseau RC, et dans ce cas ses moyens de terminaison MT sont utilisés (figures 1 et 2), soit en tant qu'interface de couplage entre au moins deux faisceaux (ici F1 et F2) du réseau RC, et dans ce cas ses moyens de terminaison MT ne sont pas utilisés (figure 3).

Cette seconde alternative permet d'éviter d'avoir à utiliser à la fois un organe de communication classique et un équipement d'interface, ce qui permet non seulement de réduire les coûts de fabrication, de simplifier la gestion des stocks et d'éviter les erreurs d'installation dues à des interversions, mais également de déplacer l'adaptation d'impédance du côté du seul second faisceau F2 afin de limiter la diversité de câblage à ce dernier (F2) et ainsi réduire sensiblement le nombre de fils dans les faisceaux concernés. On notera que cette absence de diversité de câblage sur le premier faisceau F1 rend plus facile et moins onéreuse la gestion de ce dernier (F1). On notera également que le second connecteur C2 peut, par exemple, être connecté aux fils du faisceau (ici F2) qui présente initialement la plus faible diversité de câblage, de manière à ne pas augmenter celle de l'autre faisceau (ici F1) qui est la plus importante du fait du nombre d'organes de communication qui sont connectés à lui.

On notera également que l'organe de communication OC pourrait servir d'interface de couplage entre plus de deux faisceaux du réseau RC, et par exemple trois ou quatre. Dans ce cas il comprend autant de seconds connecteurs C2 qu'il y a de faisceaux à coupler au faisceau qui est connecté à son premier connecteur C1. Mais seul l'un des moyens de terminaison MT de l'un de ses seconds connecteurs C2 est utilisé lorsqu'il est utilisé seulement en tant qu'extrémité du réseau RC.

De préférence, les N impédances spécifiques par rapport à la masse, produites par les moyens de terminaison MT d'un second connecteur C2, sont comprises entre vingt ohms et cinquante ohms. Par exemple, dans le cas d'un réseau CAN HS elles peuvent être égales à environ 30 ohms.

Par exemple, et comme illustré non limitativement sur la figure 2, lorsque N est égal à deux, les moyens de terminaison MT peuvent comprendre des premier CR1 et second CR2 composants résistifs et un composant capacitif CC couplés entre eux. En présence d'une autre paire de fils (N = 4), les moyens de terminaison MT peuvent, par exemple, comprendre d'autres premier et second composants résistifs et un autre composant capacitif CC couplés entre eux et associés à la seconde paire de fils. Le premier composant résistif CR1 comprend une première borne de connexion connectée à la première borne auxiliaire BA1 et une seconde borne de connexion. Le second composant résistif CR2 comprend une première borne de connexion connectée à la seconde borne auxiliaire BA2 et une seconde borne de connexion connectée à la seconde borne de connexion du premier composant résistif CR1. Le composant capacitif CC comprend une première borne de connexion connectée aux secondes bornes de connexion des premier CR1 et second CR2 composants résistifs et une seconde borne de connexion connectée à la masse (ici celle du véhicule). Les premier CR1 et second CR2 composants résistifs fonctionnent ainsi en pont diviseur.

On notera que les premier CR1 et second CR2 composants résistifs peuvent être de simples résistances ou bien peuvent être constitués d'au moins un composant électronique offrant une résistance. De même, le composant capacitif CC peut être un simple condensateur ou bien peut être constitué d'au moins un composant électronique offrant une capacité.

De préférence, le premier composant résistif CR1 peut présenter une résistance comprise entre 40 ohms et 66 ohms. Dans le cas d'un réseau CAN HS, le premier composant résistif CR1 peut présenter une résistance comprise entre 58 ohms et 66 ohms. Par exemple, et toujours dans le cas d'un réseau CAN HS, cette résistance peut être égale à 62 ohms. Dans le cas d'un réseau FlexRay la résistance du premier composant résistif CR1 peut être égale à 50 ohms. Par ailleurs, ce premier composant résistif CR1 peut, par exemple, être choisi de manière à dissiper une puissance supérieure ou égale à 0,25 W.

Egalement de préférence, le second composant résistif CR2 peut présenter une résistance comprise entre 40 ohms et 66 ohms. Dans le cas d'un réseau CAN HS, le second composant résistif CR2 peut présenter une résistance comprise entre 58 ohms et 66 ohms. Par exemple, et toujours dans le cas d'un réseau CAN HS, cette résistance peut être égale à 62 ohms. Dans le cas d'un réseau FlexRay la résistance du second composant résistif CR2 peut être égale à 50 ohms. Par ailleurs, ce second composant résistif CR2 peut, par exemple, être choisi de manière à dissiper une puissance supérieure ou égale à 0,25 W.

Egalement de préférence, le composant capacitif CC peut présenter une capacité comprise entre 4 nF et 110 nF. Dans le cas d'un réseau CAN HS, le composant capacitif CC peut présenter une capacité comprise entre 90 nF et 110 nF. Par exemple, et toujours dans le cas d'un réseau CAN HS, cette capacité peut être égale à 100 nF. Dans un réseau FlexRay cette capacité peut être égale à 4, 7 nF.

On notera qu'un troisième composant résistif peut être éventuellement placé en série avec le composant capacitif CC, notamment dans le cas d'un réseau FlexRay. Dans le cas d'un réseau FlexRay la résistance de ce troisième composant résistif peut être inférieure à 10 ohms.

On notera également que les impédances produites par les moyens de terminaison MT peuvent être identiques ou bien légèrement différentes. Par conséquent, les premier CR1 et second CR2 composants résistifs peuvent présenter des résistances identiques ou bien légèrement différentes.

## Revendications

1. Organe de communication (OC) pour un réseau (RC) de type multiplexé et comportant au moins un premier faisceau (F1) comportant au moins un groupe de N fils avec N ≥ 2, ledit organe (OC) comprenant un premier connecteur (C1) muni de N premières bornes principales (BP1n) propres à être connectées respectivement auxdits N fils du groupe du premier faisceau (F1), **caractérisé en ce qu'**il comprend en outre des moyens de terminaison (MT) propres à définir N impédances spécifiques, et au moins un second connecteur (C2) muni de i) N secondes bornes principales (BP2n) connectées respectivement auxdites N premières bornes principales (BP1n) et propres à être connectées respectivement à N fils d'un groupe d'un second faisceau (F2) dudit réseau (RC), et ii) N bornes auxiliaires (BAn) connectées auxdits moyens de terminaison (MT) afin d'être placées respectivement auxdites N impédances spécifiques, et propres, lorsque ledit organe (OC) est installé à une extrémité dudit réseau (RC), à être couplées respectivement auxdites N secondes bornes principales (BP2n) dudit second connecteur (C2) afin qu'elles appliquent respectivement auxdites N premières bornes principales (BP1n) lesdites N impédances spécifiques.

2. Organe selon la revendication 1, **caractérisé en ce qu'**il comprend un module d'émission et de réception (MER) connecté auxdites N premières bornes principales (BP1n) et auxdites N secondes bornes principales (BP2n).

3. Organe selon l'une des revendications 1 et 2, **caractérisé en ce que** lesdites N impédances spécifiques par rapport à la masse sont comprises entre vingt ohms et cinquante ohms.

4. Organe selon l'une des revendications 1 à 3, **caractérisé en ce que**, lorsque N est égal à deux, lesdits moyens de terminaison (MT) comprennent i) un premier composant résistif (CR1) comprenant une première borne de connexion connectée à une première borne auxiliaire (BA1) et une seconde borne de connexion, ii) un second composant résistif (CR2) comprenant une première borne de connexion connectée à une seconde borne auxiliaire (BA2) et une seconde borne de connexion connectée à ladite seconde borne de connexion du premier composant résistif (CR1), et iii) un composant capacitif (CC) comprenant une première borne de connexion connectée auxdites secondes bornes de connexion des premier (CR1) et second (CR2) composants résistifs et une seconde borne de connexion connectée à la masse.

5. Organe selon la revendication 4, **caractérisé en ce que** ledit premier composant résistif (CR1) présente une résistance comprise entre 40 ohms et 66 ohms.

6. Organe selon l'une des revendications 4 et 5, **caractérisé en ce que** ledit second composant résistif (CR2) présente une résistance comprise entre 40 ohms et 66 ohms.

7. Organe selon l'une des revendications 4 à 6, **caractérisé en ce que** ledit composant capacitif (CC) présente une capacité comprise entre 4 nF et 110 nF.

8. Véhicule comprenant un réseau (RC) de type multiplexé et comportant au moins un premier faisceau (F1) comportant au moins un groupe de N fils avec N ≥ 2, **caractérisé en ce qu'**il comprend en outre au moins un organe de communication (OC) selon l'une des revendications précédentes, placé à une extrémité dudit réseau (RC) en ayant ses N bornes auxiliaires (BAn) couplées respectivement auxdites N secondes bornes principales (BP2n) d'un second connecteur (C2).

9. Véhicule selon la revendication 8, **caractérisé en ce qu'**il est de type automobile.

## Patentansprüche

1. Kommunikationsvorrichtung (OC) für ein Netzwerk (RC) des Multiplex-Typs und mit mindestens einem ersten Bündel (F1), das mindestens eine Gruppe von N Drähten mit N ≥ 2 umfasst, wobei die Vorrichtung (OC) einen ersten Verbinder (C1) umfasst, der mit N ersten Hauptanschlüssen (BP1n) versehen ist, die geeignet sind, jeweils mit den N Drähten der Gruppe des ersten Bündels (F1) verbunden zu werden, **dadurch gekennzeichnet, dass** sie außerdem Abschlussmittel (MT) umfasst, die geeignet sind, N spezifische Impedanzen zu definieren und mindestens einem zweiten Verbinder (C2), der versehen ist mit i) N zweiten Hauptanschlüssen (BP2n), die jeweils mit den N ersten Hauptanschlüssen (BP1n) verbunden sind und geeignet sind, jeweils mit N Drähten einer Gruppe eines zweiten Bündels (F2) des Netzwerks (RC) verbunden zu werden, und ii) N Hilfsanschlüssen (BAn), die mit den Abschlussmitteln (MT) verbunden sind, um jeweils an den N spezifischen Impedanzen angeordnet zu werden und geeignet ist, wenn das Element (OC) an einem Ende des Netzwerks (RC) installiert ist, jeweils mit den N zweiten Hauptanschlüssen (BP2n) des zweiten Verbinders (C2) gekoppelt zu werden, um jeweils an die N ersten Hauptanschlüsse (BP1n) die N spezifischen Impedanzen anzulegen.

2. Vorrichtung nach Anspruch 1, **dadurch gekennzeichnet, dass** sie ein Sende- und Empfangsmodul (MER) umfasst, das mit den N ersten Hauptanschlüssen (BP1n) und mit den N zweiten Hauptanschlüssen (BP2n) verbunden ist.

3. Vorrichtung nach einem der Ansprüche 1 und 2, **dadurch gekennzeichnet, dass** die N spezifischen Impedanzen in Bezug auf Masse zwischen zwanzig Ohm und fünfzig Ohm liegen.

4. Vorrichtung nach einem der Ansprüche 1 bis 3, **dadurch gekennzeichnet, dass**, wenn N gleich zwei ist, die Abschlussmittel (MT) i) ein erstes Widerstandsbauteil (CR1) mit einer ersten Anschlussklemme, die mit einem ersten Hilfsanschluss (BA1) verbunden ist, und einer zweiten Anschlussklemme ii) eine zweite Widerstandskomponente (CR2), die eine erste Anschlussklemme, die mit einer zweiten Hilfsklemme (BA2) verbunden ist, und eine zweite Anschlussklemme, die mit der zweiten Anschlussklemme der ersten Widerstandskomponente (CR1) verbunden ist, umfasst, und iii) eine kapazitive Komponente (CC), die eine erste Anschlussklemme, die mit den zweiten Anschlussklemmen der ersten (CR1) und zweiten (CR2) Widerstandskomponenten verbunden ist, und eine zweite Anschlussklemme, die mit Masse verbunden ist, umfasst.

5. Vorrichtung nach Anspruch 4, **dadurch gekennzeichnet, dass** das erste Widerstandselement (CR1) einen Widerstand zwischen 40 Ohm und 66 Ohm aufweist.

6. Vorrichtung nach einem der Ansprüche 4 und 5, **dadurch gekennzeichnet, dass** das zweite Widerstandselement (CR2) einen Widerstand zwischen 40 Ohm und 66 Ohm aufweist.

7. Organ nach einem der Ansprüche 4 bis 6, **dadurch gekennzeichnet, dass** die kapazitive Komponente (CC) eine Kapazität zwischen 4 nF und 110 nF aufweist.

8. Fahrzeug mit einem Netzwerk (RC) vom Multiplex-Typ und mit mindestens einem ersten Bündel (F1), das mindestens eine Gruppe von N Drähten mit N ≥ 2 umfasst, **dadurch gekennzeichnet, dass** es außerdem mindestens ein Kommunikationsorgan (OC) nach einem der vorhergehenden Ansprüche umfasst, das an einem Ende des Netzwerks (RC) angeordnet ist, indem seine N Hilfsanschlüsse (BAn) jeweils mit den N zweiten Hauptanschlüssen (BP2n) eines zweiten Verbinders (C2) gekoppelt sind.

9. Fahrzeug nach Anspruch 8, **dadurch gekennzeichnet, dass** es von der Art eines Automobils ist.

## Claims

1. Communication device (OC) for a network (RC) of the multiplexed type and comprising at least one first bundle (F1) comprising at least one group of N wires with N ≥ 2, said device (OC) comprising a first connector (C1) provided with N first main terminals (BP1n) adapted to be connected respectively to said N wires of the group of the first bundle (F1), **characterised in that** it further comprises termination means (MT) adapted to define N specific impedances and at least one second connector (C2) provided with i) N second main terminals (BP2n) connected respectively to said N first main terminals (BP1n) and suitable to be connected respectively to N wires of a group of a second bundle (F2) of said network (RC), and ii) N auxiliary terminals (BAn) connected to said termination means (MT) in order to be placed respectively at said N specific impedances and suitable, when said member (OC) is installed at one end of said network (RC), to be respectively coupled to said N second main terminals (BP2n) of said second connector (C2) so as to respectively apply to said N first main terminals (BP1n) said N specific impedances.

2. The device according to claim 1, **characterized in that** it comprises a transmitting and receiving module (MER) connected to said N first main terminals (BP1n) and to said N second main terminals (BP2n).

3. The device according to any of claims 1 and 2, **characterized in that** said N specific impedances with respect to ground are comprised between twenty ohms and fifty ohms.

4. A device according to any one of claims 1 to 3, **characterised in that**, when N is equal to two, said termination means (MT) comprise i) a first resistive component (CR1) comprising a first connection terminal connected to a first auxiliary terminal (BA1) and a second connection terminal ii) a second resistive component (CR2) comprising a first connection terminal connected to a second auxiliary terminal (BA2) and a second connection terminal connected to said second connection terminal of the first resistive component (CR1), and iii) a capacitive component (CC) comprising a first connection terminal connected to said second connection terminals of the first (CR1) and second (CR2) resistive components and a second connection terminal connected to ground.

5. The device according to claim 4, **characterized in that** said first resistive component (CR1) has a resistance between 40 ohms and 66 ohms.

6. A device according to any of claims 4 and 5, **characterised in that** said second resistive component (CR2) has a resistance of between 40 ohms and 66 ohms.

7. A device according to any of claims 4 to 6, **characterised in that** said capacitive component (CC) has a capacitance of between 4 nF and 110 nF.

8. Vehicle comprising a network (RC) of multiplexed type and including at least a first bundle (F1) including at least a group of N wires with N ≥ 2, **characterized in that** it further comprises at least a communication member (OC) according to one of the preceding claims, placed at one end of said network (RC) by having its N auxiliary terminals (BAn) coupled respectively to said N second main terminals (BP2n) of a second connector (C2).

9. Vehicle according to claim 8, **characterized in that** it is of the automotive type.
